# EUROPEAN PATENT APPLICATION

(11) **EP 1 577 660 A1**
(43) Date of publication of application: **21.09.2005**
(21) Application number: 03768212.7
(22) Date of filing: 25.12.2003
(51) Int. Cl.: G01N 13/16, G12B 21/08

(54) **MEASURING METHOD AND DEVICE FOR VIBRATION FREQUENCY OF MULTI-CANTILEVER**

(30) Priority: 27.12.2002 JP 2002378996
(71) Applicant: Japan Science and Technology Agency, Saitama 332-0012 (JP)
(72) Inventor: KAWAKATSU, Hideki, Setagaya-ku, Tokyo 158-0086 (JP)
(74) Representative: Hoarton, Lloyd Douglas Charles
(86) International application number: PCT/JP2003/016677
(87) International publication number: WO 2004/061427

(57) **Abstract**

A method and device for measuring vibration frequency of a multi-cantilever which eliminate the need of incorporating an exciting or detecting element in each cantilever and simplify the structure of a cantilever array by means of optical pumping and optical measurement, and can provide high Q values and diversities of high-frequency operations and modification methods to the cantilevers. A cantilever array (11) in which the natural frequencies of cantilevers (2 ~ n) are different is used, and their natural vibrations are sequentially excited by modulation optical excitation in order to measure the vibrations with a laser Doppler meter.

## Description

### Technical Field

The present invention relates to a method and device for measuring vibration frequency of a multi-cantilever, and, more particularly, to vibration measurement, a scanning probe microscope, and a mass/material detector thereof.

### Background Art

Hitherto, wiring has been performed for each cantilever in order to achieve vibration excitation or extract a signal, or an optical grating has been incorporated for each cantilever in order to measure the displacement and vibration frequency of each cantilever from its associated diffraction pattern.

Related arts using such related methods are disclosed in Non-Patent Documents 1 to 7 below.

An example in which the displacements of approximately five to ten cantilevers are successively read out with a mechanism having a plurality of optical levers arranged in a time series is disclosed in Non-Patent Document 8 below.

A laser Doppler meter is widely used in measuring the vibration of a specimen that vibrates. In Japanese Patent Application No. 2001-184604, the inventor has already proposed a method for sensing a force, field, and material by using the laser Doppler meter in measuring the vibration of a cantilever.

Optical pumping is a method which has existed for over 10 years for achieving vibration excitation, and the results of study of the method are disclosed in Non-Patent Documents 9 to 17 below.

In PCT/JP02/05835, the inventor has proposed a method for sensing a force, field, and material by combining the use of a laser Doppler meter and optical pumping.

[Non-Patent Document 1] Microelectromechanical scanning probe instruments for array architectures, Scott A. Miller, Kimberly L. Turner, and Noel C. MacDonald, Review of Scientific Instruments 68 (1997) 4155-4162.

[Non-Patent Document 2] 2D AFM cantilever arrays a first step towards a Terabit storage device, M. Lutwyche, C. Andreoli, G. Binnig, J. Brugger, U. Drechsler, W. Haeberle, H. Rohrer, H. Rothuizen, P. Vettiger, G. Yaralioglu and C. F. Quate: Sens. & Actuat. A73 (1999) 89.

[Non-Patent Document 3] Ultrahigh density, high-date-rate NEMS-based AFM data storage system, P. Vettiger, J. Brugger, M. Despont, U. Drechsler, U. Durig, W. Haeberle, M. Lutwyche, H. Rothuizen, R. Stutz, R. Widmer and G. Binnig: Micro. Eng. 46 (1999) 11.

[Non-Patent Document 4] Integration of through-wafer interconnects with a two-dimensional cantilever array, E. M. Chow, H. T. Soh, H. C. Lee, J. D. Adams, S. C. Minne, G. Yaralioglu, A. Atalar, C. F. Quate and T. W. Kenny: Sens. & Actuat. A83 (2000) 118.

[Non-Patent Document 5] Fabrication and characterization of cantilevers with integrated sharp tips and piezoelectric elements for actuation and detection for parallel AFM applications, P. -F. Indermuhle, G. Schurmann, G. -A. Racine and N. F. de Rooij: Sens. & Actuat. A60 (1997) 186.

[Non-Patent Document 6] VLSI-NEMS chip for parallel AFM data storage, M. Despont, J. Brugger, U. Drechsler, U. Duerig, W. Haeberle, M. Lutwyche, H. Rothuizen, R. Stutz, R. Widmer, G. Binnig, H. Rohrer and P. Vettiger: Sens. & Actuat. A80 (2000) 100.

[Non-Patent Document 7] An artificial nose based on a micromechanical cantilever array, H. P. Lang, M. K. Baller, R. Berger, Ch. Gerber, J. K. Gimzewski, F. M. Battiston, P. Fornaro, J. P. Ramseyer, E. Meyer and H. -J. Guntherodt: Analytica Chimica Acta 393 (1999) 59.

[Non-Patent Document 8] Sequential position readout from arrays of micromechanical cantilever sensors, H. P. Lang, R. Berger, C. Andreoli, J. Brugger, M. Despont, P. Vettiger, Ch. Gerber, J. K. Gimzewski, J. P. Ramseyer, E. Meyer and H. -J. Guntherodt: Appl. Phys. Lett. 72 (1998) 383.

[Non-Patent Document 9] D. W. Satchell, J. C. Greenwood, "A thermally-excited silicon accelerometer," Sens. Act., 17 (1989) 241-245.

[Non-Patent Document 10] M. B. Othman and A. Brunnschweiler, "Electrothermally excited silicon beam mechanical resonators," Elect. Lett., 2 (1987) 728-730.

[Non-Patent Document 11] T. S. J. Lammerink, M. Elwenspoek, and J. H. J. Fluitman, "Frequency Dependence of thermal excitation of micromechanical resonators," Sens. Act. A, 25-27 (1991) 685-689.

[Non-Patent Document 12] H. Yu, Y. Wang, C. Ding, Y. Wang, and Y. Xu, "The characteristics of point-heating excitation in silicon micro-mechanical resonators," Sens. Act., A77 (1999) 187-190.

[Non-Patent Document 13] J. Funk, J. Buehler, J. G. Korvink, and H. Baltes, "Thermomechanical modeling of an actuated micromirror," Sens. Act. A, 46-47 (1995) 632-636.

[Non-Patent Document 14] G. C. Ratcliff, D. A. Erie, and R. Superfine, "Photothermal modulation for oscillating mode atomic force microscopy in solution," Appl. Phys. Lett., 72 (1998) 1911-1913.

[Non-Patent Document 15] N. Umeda, S. Ishizaki, and H. Uwai, "Scanning attractive force microscope using photothermal vibration," J. Vac. Sci. Technol., B 9 (1991) 1318-1322.

[Non-Patent Document 16] M. Zalalutdinov, A. Zehnder, A. Olkhovets, S. Turner, L. Sekaric, B. Ilic, D. Czaplewski, J. M. Parpia, and H. G. Craighead, "Autoparametric optical drive for micromechanical oscillators," Appl. Phys. Lett., 79 (2001) 695-697.

[Non-Patent Document 17] Y. -C. Shen, A. Lomonosov, A. Frass, and P. Hess, "Excitation of higher harmonics in transient laser gratings by an ablative mechanism," Appl. Phys. Lett., 73 (1998) 1640-1642.

[Non-Patent Document 18] H. Kawakatsu, S. Kawai, D. Saya, M. Nagashio, D. Kobayashi, H. Toshiyoshi, and H. Fujita, "Towards Atomic Force Microscopy up to 100 MHz," Review of Scientific Instruments 73 (2002) 2317.

### Disclosure of Invention

However, when the aforementioned related multi-cantilever detection methods are used, if the number of cantilevers is increased to a few million to a few hundreds of millions of cantilevers, it becomes difficult to measure the vibration frequency of the multi-cantilever.

More specifically, for a related multi-cantilever exhibiting self-excited vibration and having a self-excited vibration detection function, an increase in the number of cantilevers complicates the structure of a cantilever array and reduces the performance of each cantilever and makes it difficult to variously modify the cantilever array. In addition, the Q values of the vibrations of the cantilevers will be reduced.

Accordingly, in view of the above-described situation, it is an object of the present invention to provide a method and device for measuring vibration frequency of a multi-cantilever which eliminate the need of incorporating an exciting or detecting element in each cantilever and simplify the structure of a cantilever array by means of optical or electric pumping and optical measurement, and can provide high Q values and diversities of high-frequency operations and modification methods to the cantilevers.

By making it possible to determine the number of excitations of many cantilevers, it is possible to detect the same material at the plurality of cantilevers, so that a larger number of materials can be detected.

In order to achieve the above-described object, the present invention features the following:
(1) A method for measuring vibration frequency of a multi-cantilever in which natural vibrations of a plurality of cantilevers having different natural frequencies are successively excited by modulation excitation in order to measure the vibrations with a laser Doppler meter.
(2) A method for measuring vibration frequency of a multi-cantilever in which natural vibrations of a plurality of cantilevers having different natural frequencies are successively excited by modulation excitation in order to measure the vibrations with a homodyne interferometer.
(3) The method for measuring vibration frequency of a multi-cantilever according to either (1) or (2), wherein the modulation excitation is a modulation optical excitation.
(4) The method for measuring vibration frequency of a multi-cantilever according to either (1) or (2), wherein the modulation excitation is a modulation electrical excitation.
(5) A method for measuring vibration frequency of a multi-cantilever in which natural vibrations of a plurality of cantilevers having different natural frequencies are successively excited by constant light excitation in order to measure the vibrations with a laser Doppler meter.
(6) A method for measuring vibration frequency of a multi-cantilever in which natural vibrations of a plurality of cantilevers having different natural frequencies are successively excited by constant light excitation in order to measure the vibrations with a homodyne interferometer.
(7) A device for measuring vibration frequency of a multi-cantilever comprising a plurality of cantilevers having different natural frequencies, means for successively exciting natural vibrations of the cantilevers by modulation excitation, and a laser Doppler meter for measuring the vibrations.
(8) A device for measuring vibration frequency of a multi-cantilever comprising a plurality of cantilevers having different natural frequencies, means for successively exciting natural vibrations of the cantilevers by modulation excitation, and a homodyne interferometer for measuring the vibrations.
(9) A device for measuring vibration frequency of a multi-cantilever comprising a plurality of cantilevers having different natural frequencies, means for simultaneously exciting natural vibrations of the cantilevers by constant light excitation, and a laser Doppler meter for measuring the vibrations.
(10) A device for measuring vibration frequency of a multi-cantilever comprising a plurality of cantilevers having different natural frequencies, means for simultaneously exciting natural vibrations of the cantilevers by constant light excitation, and a homodyne interferometer for measuring the vibrations.
(11) The device for measuring vibration frequency of a multi-cantilever according to any one of (7), (8), (9), and (10), wherein the cantilevers are disposed in rows in an array.
(12) The device for measuring vibration frequency of a multi-cantilever according to any one of (7), (8), (9) and (10), wherein the cantilevers are disposed radially in a cluster so that the cantilevers are capable of being irradiated with a common excitation spot.
(13) A scanning probe microscope using the device for measuring vibration frequency of a multi-cantilever according to any one of Claims (7), (8), (9), and (10), for self-exciting the natural frequencies of the cantilevers in order to detect an interaction between a specimen and a probe at an end of each cantilever as a change in a self-excitation vibration frequency, a self-excitation vibration amplitude, or a self-excitation vibration phase.
(14) A mass/material detector using the device for measuring vibration frequency of a multi-cantilever according to any one of (7), (8), (9), and (10), for self-exciting the natural frequencies of the cantilevers in order to detect a change in a mass adhered to a probe at an end of each cantilever as a change in a self-excitation vibration frequency, a self-excitation vibration amplitude, or a self-excitation vibration phase.

### Brief Description of the Drawings

Fig. 1 is a first schematic view of a laser spot and a multi-cantilever when excitation is performed by modulation light in a first embodiment of the present invention.
Fig. 2 is a second schematic view of the laser spot and the multi-cantilever when the excitation is performed by modulation light in the first embodiment of the present invention.
Fig. 3 is a schematic view of a device for measuring vibration frequency of the multi-cantilever when the excitation is performed by modulation light in the first embodiment of the present invention.
Fig. 4 is a schematic view of a device for measuring vibration frequency of the multi-cantilever when excitation is performed by a constant light in a second embodiment of the present invention.
Fig. 5 is a structural view of an arrangement of cantilevers in a third embodiment of the present invention.
Fig. 6 is a structural view of an arrangement of cantilevers in a fourth embodiment of the present invention.

### Best Mode for Carrying Out the Invention

Embodiments of the present invention will hereunder be described in detail below.

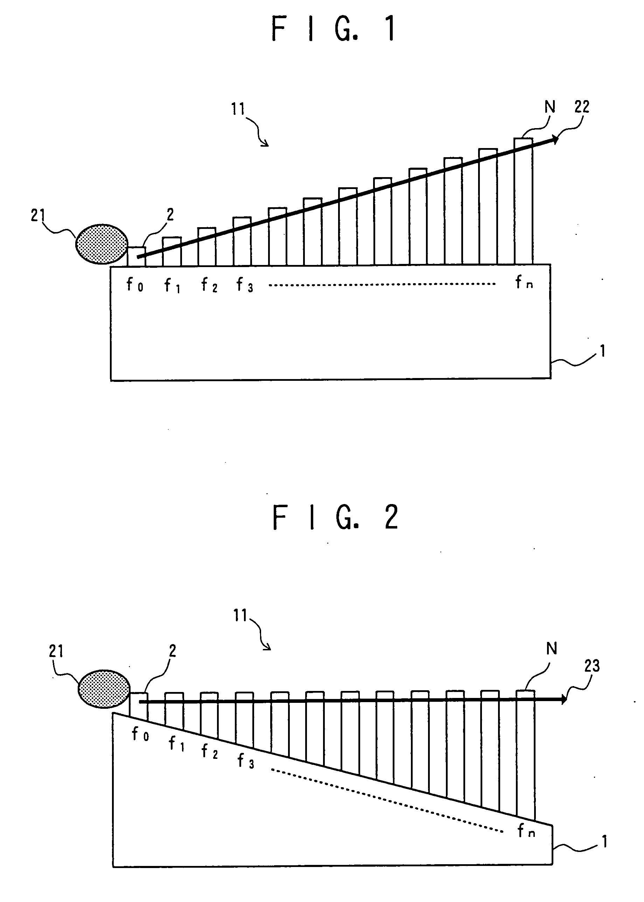

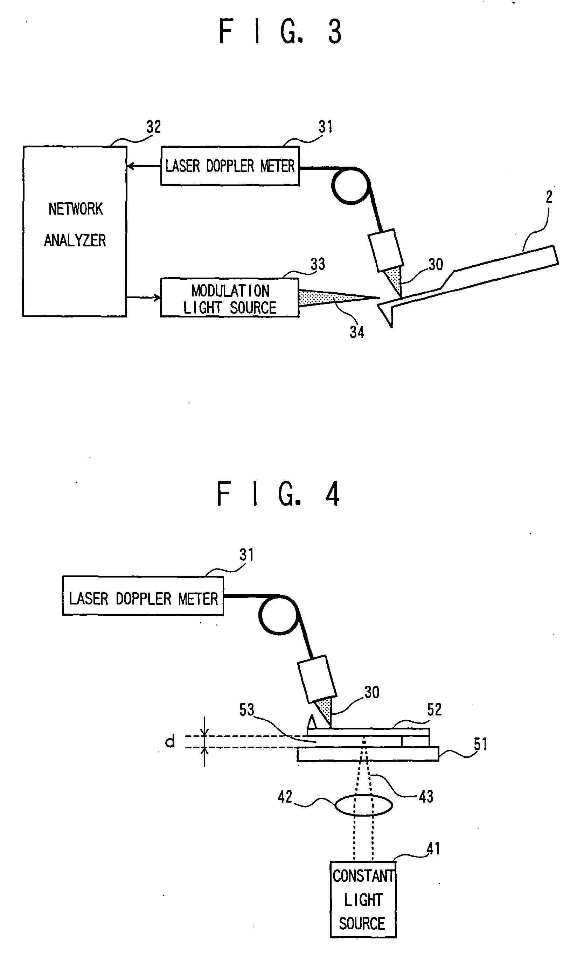

Fig. 1 is a first schematic view of a laser spot and a multi-cantilever when excitation is performed by modulation light in a first embodiment of the present invention, Fig. 2 is a second schematic view of the laser spot and the multi-cantilever when the excitation is performed, and Fig. 3 is a schematic view of a device for measuring vibration frequency of the multi-cantilever when the excitation is performed.

In each of Figs. 1 and 2, reference numeral 1 denotes a substrate, symbols 2 to N denote cantilevers, reference numeral 11 denotes a cantilever array (here, one row), and reference numeral 21 denotes a laser spot. In Fig. 1, reference numeral 22 denotes a laser spot scanning direction, and, in Fig. 2, reference numeral 23 denotes a laser spot scanning direction.

Accordingly, in Fig. 1, the laser spot scanning is performed upward, and, in Fig. 2, the laser spot scanning is performed horizontally, so that the laser spot 21 exhibits optical excitation and has an optical detection function.

In Fig. 3, reference numeral 30 denotes a measurement light of a laser Doppler meter, reference numeral 31 denotes the laser Doppler meter, reference numeral 32 denotes a network analyzer to which an output of the laser Doppler meter 31 is connected, reference numeral 33 denotes a modulation light source connected to the network analyzer 32, and reference numeral 34 denotes a modulation light (excitation light) emitted from the modulation light source.

Here, by using light-guiding means (not shown), a cantilever 2 is scanned with the measurement light 30 and the excitation light 34, and sweeping of the frequency of a vibration generation excitation signal of the network analyzer 32 is performed in a bandwidth covering the natural frequency of the cantilever 2 being irradiated with the laser spot. When the laser spot is used to scan from one end to the other end of the row of the cantilevers 2 to N by synchronizing the laser spot scanning and the frequency sweeping, the natural frequency and the amplitude of each of the cantilevers 2 in the row are measured. The frequency resolution and the time required for sweeping are in a contrary relationship. Limiting the observation to a group of cantilevers that have exhibited change and closely observing the vicinity of the group make the measuring device handy.

Modulation optical excitation requires matching of the laser spot scanning and excitation light modulation frequency with the frequency and the position of each of the cantilevers. A cavity is not required between the substrate and each cantilever.

This will be explained taking a cantilever array having 1000 × 1000 cantilevers as an example.

The natural frequencies of one row of cantilevers are f₁, f₂, ..., f₁₀₀₀. The individual natural frequencies satisfy the condition f₁ < f₂ < f₃ <··· < f₁₀₀₀ .

Of the cantilevers 2 to N in the row, N cantilevers are irradiated at the same time with the measurement light 30 of the laser Doppler meter 31. When the cantilever array 11 is irradiated with the modulation light 34 for vibration excitation, vibration in which the frequency of the modulation light 34 and the natural frequency of each cantilever match is excited. An optical excitation signal is driven using an output signal from the network analyzer 32, and the output of the laser Doppler meter 31 is connected to the network analyzer 32 in order to make it possible to determine the natural frequencies of the plurality of cantilevers 2 to N as a plurality of peaks with the network analyzer 32.

When the value of N is increased, the number of cantilevers which can be measured with the network analyzer 32 without scanning the optical axis is increased on the one hand, and the SN ratio of the laser Doppler meter 31 is reduced on the other. Therefore, the effective measurement area of the cantilevers is increased and a maximum N value allowable from the point of view of the SN ratio is used. If N is less than the number of cantilevers in the row, the observation range is increased by laser scanning. The same frequencies f₁, f₂, ..., f₁₀₀₀ in a first row may be repeated for other respective rows.

In an extreme case where N = 1, optical pumping and detection are performed only on one cantilever at a certain time. Here, the frequency of a vibration generation excitation signal of the network analyzer 32 is set in a bandwidth sufficient enough to cover the natural frequency of the cantilever. By synchronizing the optical spot scanning with respect to the cantilever array 11 and the frequency of the vibration generation excitation signal of the network analyzer 32, the natural vibration of the cantilever which is being observed at the time when the laser spot exists can exist in an observation frequency bandwidth of the network analyzer 32.

Accordingly, when the row of, for example, 1000 cantilevers is scanned with the laser spot, and the frequency of the vibration generation excitation signal of the network analyzer 32 is swept in synchronism with the scanning, the frequency characteristic of each cantilever can be measured.

When the frequency and amplitude of a particular cantilever, such as a cantilever ordinarily having a natural frequency of f0 hertz, change, the observer knows that the cantilever has detected a force, field, and material.

By setting the condition on the order of 1 < N < 10, the SN ratio of optical detection and the tolerance with respect to the synchronization of the frequency sweeping and the laser spot scanning on the cantilever can both be satisfied.

Although, in the foregoing description, the measurement of each row of cantilevers has been described as an example, the entire surface of the cantilever array 11 may be irradiated with the measurement light 30 of the laser Doppler meter 31 in order to make a measurement all at once.

Instead of measuring the vibration with the aforementioned laser Doppler meter, the vibration may be measured with a homodyne interferometer.

Instead of optical pumping, electrical excitation may be performed. In that case, electrostatic capacitance is provided between each cantilever, the substrate, and the specimen. Here, the frequency of the electrical excitation is swept so as to include the natural frequency of the cantilever that is being irradiated with the measurement light 30 of the laser Doppler meter.

As described above, by varying the natural frequency of a cantilever, it is possible to properly select the cantilever to be measured and to successively make the cantilevers of the whole cantilever array the objects of measurement.

The constant optical pumping requires that the cavity length with respect to the substrate be that at which excitation occurs at a certain wavelength. However, modulation is not required, so that the excitation frequency does not need to be controlled in correspondence with the cantilever that is being observed.

Accordingly, it provides each of the advantages.

Next, constant light excitation will be described.

Fig. 4 is a schematic view of a device for measuring vibration frequency of a multi-cantilever when excitation is performed by a constant light in a second embodiment of the present invention.

In the figure, reference numeral 41 denotes a constant light source, reference numeral 42 denotes a condenser lens, reference numeral 43 denotes a constant light (excitation light), reference numeral 51 denotes a substrate for transmitting light, reference numeral 52 denotes a cantilever, and reference numeral 53 denotes a gap (cavity length d) between the substrate 51 and the cantilever 52.

This will be explained taking a cantilever array having 1000 x 1000 cantilevers as an example.

Here, the gap 53 is provided between the cantilever 52 and the substrate 51 for transmitting light. The gap 53 has a size that is 1/2 times an integral multiple of the wavelength of the excitation light. Accordingly, when the constant light 43 is used for irradiation, the irradiated cantilever 52 starts to exhibit self-excitation.

The natural frequencies of one row of cantilevers are f₁, f₂, ..., f₁₀₀₀.

Of the row of cantilevers, N cantilevers are irradiated with measurement light 30 of a laser Doppler meter 31 at the same time. When the cantilever array is irradiated with the constant light 43 for vibration excitation, the cantilever 52 is self-excited. Measurement of the natural frequencies of a plurality of the cantilevers 52 with the laser Doppler meter 31 becomes possible. When the value of N is increased, the number of cantilevers 52 which can be measured without scanning the optical axis is increased on the one hand, and the SN ratio of the laser Doppler meter 31 is reduced on the other. Therefore, the effective measurement area of the cantilevers 52 is increased and a maximum N value allowable from the point of view of the SN ratio is used. If N is less than the number of cantilevers 52 in the row, the observation range is increased by laser scanning. The same frequencies f₁, f₂, ..., f₁₀₀₀ in a first row may be repeated for other respective rows.

In an extreme case where N = 1, optical pumping and detection are performed only on one cantilever at a certain time. Here, the sweep frequency is set in a bandwidth sufficient enough to cover the natural frequency of the cantilever. By synchronizing the optical spot scanning with respect to the cantilever array and the bandwidth of the laser Doppler meter 31, the natural vibration of the cantilever which is being observed at the time when the laser spot exists can exist in an observation frequency bandwidth of the laser Doppler meter 31. Accordingly, the row of, for example, 1000 cantilevers is scanned with the laser spot, and the frequency characteristic of each cantilever can be measured.

When the frequency and amplitude of a particular cantilever, such as a cantilever having a natural frequency of f0 hertz, change, the observer knows that the cantilever has detected a force, field, and material.

Although, in the foregoing description, the measurement of each row of cantilevers has been described as an example, the entire surface of the cantilever array may be irradiated with the measurement light 30 of the laser Doppler meter 31 in order to make a measurement at one time.

Instead of measuring the vibration with the aforementioned laser Doppler meter, the vibration may be measured with a homodyne interferometer.

As described above, by varying the natural frequency of a cantilever, it is possible to properly select the cantilever to be measured and to successively make the cantilevers of the whole cantilever array the objects of measurement.

When a change occurs in a particular cantilever, the cantilever is paid attention to, and the vicinity of the natural frequency of the cantilever is measured with a high frequency resolution in order to make it possible to observe very small changes.

The constant optical pumping requires that the cavity length d between the substrate and the cantilever be that at which excitation occurs at a certain wavelength. However, modulation is not required, so that the excitation frequency does not need to be controlled in correspondence with the cantilever that is being observed.

The first embodiment is advantageous in terms of allowing easier fabrication of a cantilever array, and the second embodiment is advantageous in terms of allowing easier excitation, scanning, and sweeping.

Although, in the above-described embodiments, the cantilever array is described as having the cantilevers disposed in rows, the cantilevers do not need to be disposed in straight lines as described below.

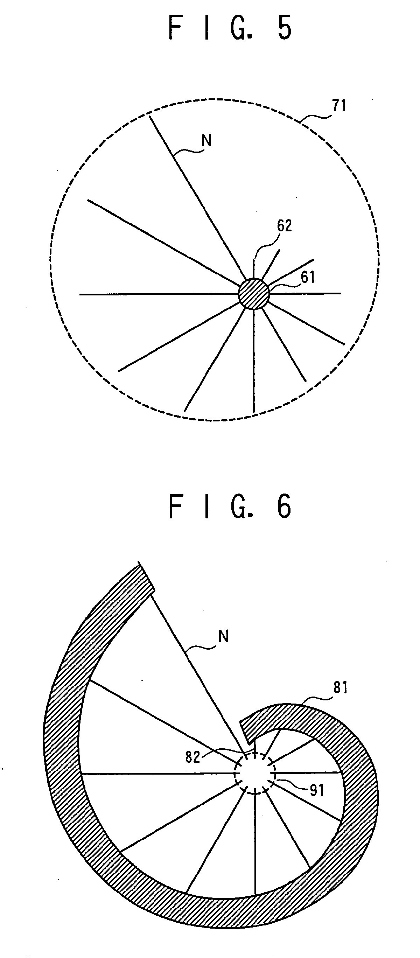

Fig. 5 is a structural view of an arrangement of cantilevers in a third embodiment of the present invention.

In the figure, cantilevers 62 to N having different natural frequencies (here, different lengths) are radially disposed in a cluster from an island-shaped base 61 so that the cantilevers can be irradiated with a common laser (excitation) spot 71. The cantilevers may be irregularly radially grouped.

In such a case, illuminating the cantilevers with the laser spot 71 indicated by dotted lines makes it possible to measure the vibrations with a laser Doppler meter (not shown) .

Fig. 6 is a structural view of an arrangement of cantilevers in a fourth embodiment of the present invention.

In the figure, cantilevers 82 to N having different natural frequencies (here, different lengths) are radially disposed in a cluster from a spiral base 81 so that the cantilevers can be irradiated with a common laser spot 91. The cantilevers may be irregularly radially grouped.

In such a case, illuminating the cantilevers with the laser spot 91 indicated by dotted lines makes it possible to measure the vibrations of the cantilevers with a laser Doppler meter (not shown).

Even in the structures shown in Figs. 5 and 6, modulation electrical excitation and optical detection can be combined.

The present invention is not limited to the above-described embodiments, so that various modifications may be made on the basis of the gist of the present invention, and these are thus not excluded from the scope of the present invention.

Accordingly, as described in detail above, the present invention provides the following advantages.
(A) The measurement of the frequency characteristics of many cantilevers can be performed by synchronizing laser spot scanning and frequency sweeping by means of, for example, a network analyzer, or by reading time-series vibration characteristics by laser spot scanning and self-excitation by a constant light. Since the frequency characteristics of the cantilevers of each row are measured at the same time as a result of scanning each row, it is not necessary to perform, for example, a complicated optical pattern recognition, and, when the optical scanning in the directions of the rows and columns of the cantilevers is completed, the measurement of the frequencies and amplitudes of all of the cantilevers is completed.
(B) Application can be made to at least a few million cantilevers.
(C) Since optical pumping and optical detection of a cantilever having a width on the order of 10 nm can be carried out, vibration excitation and detection at a higher frequency, more highly sensitive detection, and closer arrangement of the cantilevers are possible.
(D) The mechanical portion of the device for performing both optical pumping and optical detection with light can be simplified and reduced in size, so that the device becomes more reliable and has a higher level of cleanliness.
(E) Performing both optical pumping and optical detection with light causes the structure of the cantilever array to be simple, a vibration Q value to be high, various modification materials to be selectable, and the cantilevers to be disposed very close together.
(F) Performing both optical pumping and optical detection with light makes it possible for a device in a special environment, such as in an ultrahigh vacuum or at extremely low temperatures, to have a simpler structure, to be smaller, and to have a higher level of cleanliness.
(G) Performing optical detection and modulation electrical excitation for modulating an electrical field with respect to the cantilevers all at once makes it possible for a device in a special environment, such as in an ultrahigh vacuum or at extremely low temperatures, to have a simpler structure, to be smaller, and to have a higher level of cleanliness.

### Industrial Applicability

According to the present invention, the method and device for measuring vibration frequency of a multi-cantilever are suitable for vibration measurement of a multi-cantilever, a scanning probe microscope, and a mass/material detector.

## Claims

1. A method for measuring vibration frequency of a multi-cantilever in which natural vibrations of a plurality of cantilevers having different natural frequencies are successively excited by modulation excitation in order to measure the vibrations with a laser Doppler meter.

2. A method for measuring vibration frequency of a multi-cantilever in which natural vibrations of a plurality of cantilevers having different natural frequencies are successively excited by modulation excitation in order to measure the vibrations with a homodyne interferometer.

3. The method for measuring vibration frequency of a multi-cantilever according to either Claim 1 or Claim 2, wherein the modulation excitation is a modulation optical excitation.

4. The method for measuring vibration frequency of a multi-cantilever according to either Claim 1 or Claim 2, wherein the modulation excitation is a modulation electrical excitation.

5. A method for measuring vibration frequency of a multi-cantilever in which natural vibrations of a plurality of cantilevers having different natural frequencies are successively excited by constant light excitation in order to measure the vibrations with a laser Doppler meter.

6. A method for measuring vibration frequency of a multi-cantilever in which natural vibrations of a plurality of cantilevers having different natural frequencies are successively excited by constant light excitation in order to measure the vibrations with a homodyne interferometer.

7. A device for measuring vibration frequency of a multi-cantilever comprising:
(a) a plurality of cantilevers having different natural frequencies;
(b) means for successively exciting natural vibrations of the cantilevers by modulation excitation; and
(c) a laser Doppler meter for measuring the vibrations.

8. A device for measuring vibration frequency of a multi-cantilever comprising:
(a) a plurality of cantilevers having different natural frequencies;
(b) means for successively exciting natural vibrations of the cantilevers by modulation excitation; and
(c) a homodyne interferometer for measuring the vibrations.

9. A device for measuring vibration frequency of a multi-cantilever comprising:
(a) a plurality of cantilevers having different natural frequencies;
(b) means for simultaneously exciting natural vibrations of the cantilevers by constant light excitation; and
(c) a laser Doppler meter for measuring the vibrations.

10. A device for measuring vibration frequency of a multi-cantilever comprising:
(a) a plurality of cantilevers having different natural frequencies;
(b) means for simultaneously exciting natural vibrations of the cantilevers by constant light excitation; and
(c) a homodyne interferometer for measuring the vibrations.

11. The device for measuring vibration frequency of a multi-cantilever according to any one of Claims 7, 8, 9, and 10, wherein the cantilevers are disposed in rows in an array.

12. The device for measuring vibration frequency of a multi-cantilever according to any one of Claims 7, 8, 9, and 10, wherein the cantilevers are disposed radially in a cluster so that the cantilevers are capable of being irradiated with a common excitation spot.

13. A scanning probe microscope using the device for measuring vibration frequency of a multi-cantilever according to any one of Claims 7, 8, 9, and 10 for self-exciting the natural frequencies of the cantilevers in order to detect an interaction between a specimen and a probe at an end of each cantilever as a change in a self-excitation vibration frequency, a self-excitation vibration amplitude, or a self-excitation vibration phase.

14. A mass/material detector using the device for measuring vibration frequency of a multi-cantilever according to any one of Claims 7, 8, 9, and 10 for self-exciting the natural frequencies of the cantilevers in order to detect a change in a mass adhered to a probe at an end of each cantilever as a change in a self-excitation vibration frequency, a self-excitation vibration amplitude, or a self-excitation vibration phase.
